# EUROPEAN PATENT APPLICATION

(11) **EP 2 101 474 A1**
(43) Date of publication of application: **16.09.2009**
(21) Application number: 08290233.9
(22) Date of filing: 10.03.2008
(51) Int. Cl.: H04L 29/08

(54) **Service bindings for web services**

(71) Applicant: Alcatel Lucent, 75008 Paris (FR)
(72) Inventor: Forlivesi, Claudio, 1040 Brussels (BE); Waegeman, Eric Victor, 9112 Sinaai (BE)
(74) Representative: Rank, Christoph

(57) **Abstract**

A web service (11), comprising: a description file generator (18) for generating a description file, in particular a Web Services Definition Language, WSDL, description file (17), defining an interface (19) of the web service and a service binding (20) to the interface (19) of the web service, wherein the service binding (20) defines an implementation of the interface (19) of the web service. Preferably, the web service is a Jini service (11), and the description file generator (18) is adapted to generate a service binding (20) defining an implementation of the interface of the Jini service (11), in particular containing a pointer to at least one Jini lookup service (13) serving as a registry of Jini proxy codes (15).

## Description

### Background of the Invention

The invention relates to a web service comprising a description file generator for generating a description file, in particular a Web Services Definition Language, WSDL, description file, defining an interface of the web service and a service binding to the interface of the web service. The invention also relates to a web service client comprising a description file receiving unit for receiving a description file, in particular a WSDL description file, from a web service discovery unit, in particular a Universal Description Discovery and Integration, UDDI, repository for storing description files of web services. The invention further relates to a computer network comprising at least one such web service and at least one such web service client, to a method for generating a description file of a web service, in particular a Web Services Definition Language, WSDL, description file, and to a computer program product for implementing the method.

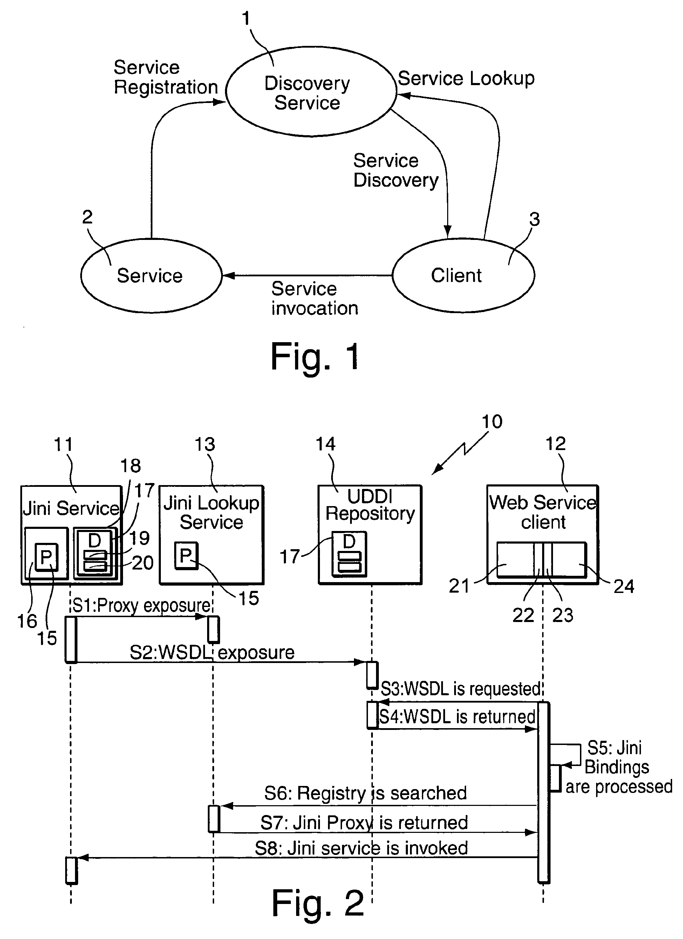

Currently, the Service Oriented Architecture (SOA) paradigm consists of a software framework shown in **Fig. 1**, comprising an entity called Discovery Service **1** or Lookup Service, which is a computer program whose responsibility is to keep a "registry" to which services **2** can dynamically register and unregister.

The registration of a service 2 involves the provision of some information concerning the service 2 to the discovery service 1 (Service Registration). The relevant information that are exchanged usually are: A description of at least one interface that the service 2 exposes, and a description of how the at least one interface can be reached, also referred to as a service binding. In certain technologies such as Jini (a Java-based distributed computing environment), the service 2 exposes the program code that allows clients to find/invoke itself. This information (including the program code that allows service invocation which is called Service Proxy, or simply Proxy) can be searched (Service Lookup) and retrieved (Service Discovery) by clients **3** that want to use the service 2. After having retrieved the relevant information, or the proxy, the client 3 can invoke the service 2 (Service Invocation).

There are currently several technologies that try to implement the SOA scheme described above, two of them being Jini services and web services: In Jini, there is a Lookup Service that is invoked by Jini services to store the code of their proxies, which are then retrieved and used by clients. In web services, there is a discovery service, called UDDI (Universal Description Discovery and Integration), where services register a description of their interface (in terms of exposed interfaces and network protocol description), written typically in WSDL (Web Services Definition Language), which in turn is an XML document (XML stands for eXtensible Markup Language). Clients normally download the WSDL description file to get the URI (Uniform Resource Identifier) of the service endpoint and the details about the configuration that has to be used by the network protocol in order to achieve a successful communication with the web service.

Both architectures have advantages and disadvantages: Jini services allow for a great freedom on the choice of the network protocol for communication between the client and the service, including built-in support for features like high service availability, load balancing, redundancy and network distribution of software components. This results in low-latency, fast and reliable services, which are in fact the ideal solution for time-critical applications. Its main disadvantage is the fact that it is based on the Java programming language, which means that Java RMI (Remote Method Invocation) is the only default protocol supported to access to the Lookup Service, and that it is only possible to register or discover proxies written in the Java programming language. Moreover, a service endpoint interface must be a Java interface, and both clients and services must already know it at development time, which is sometimes too early.

In contrast thereto, web services allow clients and services to be implemented using different languages and technologies, and binding can be done just prior to service invocation, through the exchange of WSDL containing the description of the service's endpoints. The disadvantage is that web services are by default limited to the SOAP (Simple Object Access Protocol) and HTTP (Hypertext Transfer Protocol) network protocols, and in both cases, messages are exchanged using XML. This can be a problem since parsing XML is a time-consuming operation (sometimes even more time consuming than the service itself), which in practice prevents web services from being used in real-time applications. Moreover, a web service resource is identified by a URI (Uniform Resource Identifier), which means that the network topology is impacted if a service provider wants to provide several redundant endpoints under the same URI. More in general, web services do not address problems like load-balancing and high availability, and they are slow.

In the field of SOA, when services need to be aggregated together, web services are a good solution since they provide a technology-neutral way to specify the interface and network protocol details of each participant in a business process. Unfortunately, they are too slow to be adopted in time-critical applications, due to the processing time required to parse XML and to convert internal data structures. This means that technology-neutral languages like BPel (Business Process Execution Language) cannot be used in scenarios that require business processes to achieve real-time latency, automatic recovery or high availability. If low-latency is required, then Jini services must be used.

However, there is a lack of a description language to describe Jini services as endpoints in a web service interaction, especially in a SOA scenario. This lack prevents services implemented using the Jini technology to be adopted in SOA frameworks, especially in the area of Business Processes, which are descriptions of business tasks and activities written in computable languages, such as (but not limited to) BPel. In fact, a description of a service endpoint is essential when combining several services together in a business process. This makes it difficult to define aggregations of services, or business processes inside time-critical or real-time applications. In fact, in current technology, the only way to achieve this is to use a descriptive language to expose a service endpoint, and current technology is only capable to expose endpoints based on SOAP and XML, which add latency to the service execution due to data encoding and decoding. At this moment, it is not possible to embed Jini services into business processes the same way it happens with SOAP endpoints. Consequently, business processes cannot benefit of many features that come with Jini, like automatic recovery from failures, load balancing, proximity (location) awareness and high availability.

### Object of the Invention

It is the object of the invention to provide: a web service, a web service client, a computer network, a method, and a computer program product as described above, all of which allow a web service client to invoke a web service with low latency.

### Summary of the Invention

This object is achieved by a method as described above, wherein the service binding defines an implementation of the interface of the web service. The WSDL language allows additional specifications to provide extensions to the current standard (WSDL v1.2 and WSDL v2.0 - not yet finalized) in two specific areas: service bindings and port definitions. These extensions are meant to specify a binding between an abstract interface definition and an actual communication protocol. What is lacking in the WSDL specification, and what is addressed here, is that instead of defining a binding from a WSDL-defined abstract interface to a communication protocol, a binding to an IMPLEMENTATION of that interface should be defined. Page: 5
In particular, the implementation of the interface may be a proxy to the real service which internally makes use of a dedicated network protocol to increase efficiency over traditional web services. This proxy could be implemented using any technology which supports code deployment on the client side, such as Java RMI (Remote Method Invocation), .Net remoting, and Jini. Typically, the service is implemented by using a proxy code for invoking the service, the specific data types and interfaces of the proxy code, e.g. of the Jini proxy code, being defined in the service binding.

The scheme proposed above is far more generic than the usual WSDL service bindings. Given that currently the most common way to define these bindings is through the WSDL SOAP extensions (which are a non-mandatory part of the WSDL specifications), the input and output parameters of a call to an operation need, at some point in time during the call, to be converted to XML from their internal representation, and then back to this representation from the XML. By specifying an implementation of the abstract interface instead of a SOAP endpoint definition, one may get rid of the XML data conversion, using any more efficient encoding method instead. It will be understood that the use of service bindings which define an implementation of the interface of a web service is not limited to the WDSL language, and the solution described above may be implemented also in other suitable interface description languages for web services.

In a highly preferred embodiment, the web service is a Jini service, and the description file generator is adapted to generate a service binding defining an implementation of the interface of the Jini service, preferably containing a pointer to at least one Jini lookup service serving as a registry of Jini proxy codes. In this way, the extensibility features of the WSDL language can be used to define a description of Jini services. By using Jini as a service binding, one may at once solve both the problems of Jini itself (lack of an interface description language, possibility to dynamically generate a non-Java proxy) as well as those of Web Services (high latency due to XML parsing, lack of high availability features, and so on). The pointer to the Jini lookup service is used to recover a Jini proxy code from the Jini lookup service, the Jini bindings of the Jini service defining the Jini interfaces and data types which are used in the Jini proxy code.

In a further preferred embodiment, the web service comprises a Jini proxy code generator for generating a Jini proxy code to be transmitted to a Jini lookup service. The Jini proxy code will be retrieved and processed by the web service clients for invoking the Jini web service. The person skilled in the art will appreciate that other implementations of the web service may generate proxy code which is not based on the Java programming language.

A further aspect of the invention is implemented in a web service client of the type described above, further comprising a processing unit for processing the description file to determine a mapping between the data structures of the web service client and an implementation of the interface of the web service defined in the service bindings of the description file. The web service client may parse once and for all the WSDL file, thus allowing for dynamic determination, made at run-time, of the mapping between the client's internal data structures and the specific interfaces and data types that the service implements in its proxy code.

Preferably, the processing unit is adapted to determine a mapping between the data structures of the web service client and the implementation of the interface of a Jini service. The information about the Jini implementation of the interface may be used for processing the Jini proxy code by mapping the internal data structures of the client to those provided by the Jini proxy code.

In a highly preferred embodiment, the processing unit is adapted to extract a pointer to the Jini lookup service from the service bindings of the description file, and the web service client further comprises a Jini proxy code requesting unit for requesting a Jini proxy code from the Jini lookup service. In such a way, the Jini proxy code may be retrieved from the Jini lookup service, the processing of the Jini proxy code allowing the web service client to invoke the Jini service.

Yet another aspect of the invention is implemented in a computer network, comprising: at least one web service as described above, the web service being preferably a Jini service, at least one web service client as described above, a lookup service, in particular a Jini lookup service, serving as a registry for proxy codes, and a web service discovery unit, in particular an Universal Description Discovery and Integration, UDDI, repository, for storing description files of web services. The web service client may first retrieve the description file of the Jini service from the UDDI repository, then process the Jini bindings contained in the description file for mapping its internal data structures to that of the Jini proxy code, and finally retrieve and process the Jini proxy code for invoking the Jini service.

A further aspect of the invention is implemented in a method for generating a description file of a web service, in particular a Web Services Definition Language, WSDL, description file, the method comprising: defining an interface of the web service, defining a service binding to the interface of the web service, and defining an implementation of the interface of the web service in the service binding. By specifying an implementation of the abstract interface instead of a SOAP endpoint definition, no XML data conversion is required, such that any more efficient encoding method may be used.

In a preferred variant, the service binding defines an implementation of the interface of a Jini service, preferably containing a pointer to at least one Jini lookup service. In this case, the web service is a Jini service, the Jini bindings defining a Jini implementation of the interface containing information about how to process the Jini proxy code.

A final aspect of the invention is implemented in a computer program product comprising code means for implementing the method described above, when the program is run on a data-processing system. The computer program product may be used to automatically generate the description file based on information about the Jini service and its interfaces. In particular, the person skilled in the art will appreciate that the terms "units" or "generators" used above may be implemented as functions of a program code which is processed on the data-processing systems of the Jini service or the web service client, respectively.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: a schematic diagram representing a service oriented architecture, and
- **Fig. 2**: a schematic diagram of a computer network with the steps required for invoking a Jini service from a web service client.

### Detailed Description of Preferred Embodiments

**Fig. 2** shows a computer network **10** which implements the service-oriented architecture of Fig. 1 between a web service in the form of a Jini service **11** and a web service client **12**. For this purpose, instead of one discovery service 1 as shown in Fig. 1, two discovery services are used, namely a Jini lookup service **13** serving as a registry for Jini proxy codes and a web service discovery unit in the form of an UDDI repository **14** for storing description files for web services. By making use of both recovery services 13, 14, the Jini service 11 may be invoked by an application run on the web service client 12 in a way which will be described below.

In a first step **S1**, the Jini service 11 generates its own Jini service proxy **15** (which contains the code that the web service clients will download and use) in a Jini proxy code generator **16** and exposes the Jini proxy code 15 on the Jini Lookup Service 13. In a second step **S2**, the Jini service 11 generates a WSDL description file **17** in a WSDL description file generator **18** and exposes the WSDL description file 17 on the UDDI repository 14. The WSDL description file 17 defines an interface **19** of the Jini service 11 and a service binding **20** to the interface 19 of the Jini service 11. In the service binding 20, in contrast to the present WSDL standard using e.g. a SOAP extension, no endpoint (URI) of the abstract interface 19 is defined, the service binding 16 defining a Jini implementation of the interface 19 instead, i.e. the specific interfaces and data types the Jini service 11 implements in its proxy code 15. The service binding 20 also contains a pointer to the Jini lookup service 13 to which the Jini proxy code 15 has been transferred.

In subsequent steps **S3**, **S4**, an application on the web service client 12 requests and retrieves the WSDL description file 17 from the UDDI repository **14**, the retrieved WSDL description file 17 being stored in a description file receiving unit **21** of the web service client 12. At this point of time, a processing unit **22** of the web service client 12 can parse once and for all the WSDL description file 17, in particular the service binding 20, thus resolving the following issues: Dynamic determination, made at run-time, of a mapping between the client internal data structures and the Jini-specific interfaces and data types that the Jini service 11 implements in its Jini proxy code 15, and extraction of a pointer to the Jini lookup service 13 from the service bindings 20 of the WSDL description file 17. The person skilled in the art will appreciate that the Jini service 11 may expose its Jini proxy code 15 to more than one Jini lookup service, and that the service bindings 20 may comprise pointers to each of the Jini lookup services to which the Jini proxy code 15 has been exposed.

After processing the description file 17 for extracting the pointer to the Jini lookup service 13, the web service client 12 has the knowledge how to use the Jini service 11 (interface and data mapping) and the knowledge how to search for the service implementations (knowledge of the Jini Lookup Services' locations). Therefore, a Jini proxy code requesting unit **23** of the web service client 12 can request the Jini proxy code 15 from the Jini lookup service 13 in a subsequent step **S6**. In a further step **S7**, the Jini proxy code 15 is returned to the web service client 12 and stored in a Jini proxy code receiving unit **24** of the web service client 12. Once the Jini proxy code 15 is retrieved by the web service client 12, the latter can access the Jini service 11 in a final step **S8**.

The solution described above has the following benefits for the web service client 12: No dependency of the web service client on the Java interfaces that the Jini service implements is required, since this information can be stored in the Jini service bindings and the mapping code can then be generated on the fly by the web service client 12. Consequently, the web service client 12 may be any environment which allows for dynamic code generation, such as a BPel engine, so that it is possible to aggregate Jini services together and also with normal web services inside of the same business process, and to expose any business process as a Jini service.

This is of advantage as any business process which aggregates Jini services in place of web services is going to achieve a significantly lower latency due to the fact that this solution is XML-free. Jini out-of-the-box support for redundancy allows a seamless higher service availability, a more transparent service recovery and a better load balancing (and hence a greater service throughput) to business processes. Moreover, in the way described above, it is possible for Jini services to provide a formal description of its service endpoints using a standardized language like WSDL. Also, it becomes possible for Business Process Partner Links to use any network protocol they like to exchange messages, including, but not limited to, HTTP, SIP (Session Initiation Protocol), SOAP, XML-RPC (XML-Remote Procedure Call), RTP (Real-time Transport Protocol), raw UDP (User Datagram Protocol) and raw TCP (Transmission Control Protocol), or any combination of them.

The data being exchanged by all parties are now in binary format, and the protocols used to exchange messages may be different from HTTP (Hyper-text Transfer Protocol), which is the standard for Web Services and SOAP. Consequently, it is not possible any more to have a human-readable text form of the exchanged messages without explicit data conversion. As XML is not involved any more, it is not possible any more to use XSLT (eXtensible Style-sheet Language Transformation) or CSS (Cascading Style Sheets) to convert messages into Web pages that could be displayed on an Internet browser, and a specific HTML conversion is now needed. Moreover, since HTTP may not be used for communications, a HTTP protocol conversion must be done if a service wants to be accessible directly from an Internet Browser. Also, since Jini services may now use any kind of network protocol (not only HTTP), it must be ensured that network firewalls, gateways and proxies allow the selected protocol traffic to flow between the endpoints.

The person skilled in the art will appreciate that although in the above description, the WSDL language has been used for defining the interfaces and service bindings of the web service, the solution proposed above may be implemented in other languages which allow to define a web service. Moreover, the scheme proposed herein is not limited to the service bindings of a Jini service, as the idea of using a service binding defining an implementation of an interface of a web service instead of a binding defining a communication protocol and endpoint for invoking the web service may be advantageously using other implementations of the web service, in particular in time-critical web service applications where XML data conversion should be avoided in order to achieve a low-latency solution.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the spirit and scope of the invention, as defined by the appended claims, and equivalents thereof.

## Claims

1. A web service (11), comprising:
a description file generator (18) for generating a description file, in particular a Web Services Definition Language, WSDL, description file (17), defining an interface (19) of the web service (11) and a service binding (20) to the interface (19) of the web service (11),
**characterized in that**
the service binding (20) defines an implementation of the interface (19) of the web service (11).

2. Web service according to claim 1, wherein the web service (11) is a Jini service, and wherein the description file generator (18) is adapted to generate a service binding (20) defining an implementation of the interface of the Jini service (11), preferably containing a pointer to at least one Jini lookup service (13) serving as a registry of Jini proxy codes (15).

3. Web service according to claim 2, further comprising a Jini proxy code generator (16) for generating a Jini proxy code (15) to be transmitted to a Jini lookup service (13).

4. A web service client (12), comprising:
a description file receiving unit (21) for receiving a description file, in particular a WSDL description file (17), from a web service discovery unit, in particular an Universal Description Discovery and Integration, UDDI, repository (14) for storing description files (17) of web services (11),
**characterized by**
a processing unit (22) for processing the description file (17) to determine a mapping between the data structures of the web service client (12) and an implementation of the interface (19) of the web service (11) defined in the service bindings (20) of the description file.

5. Web service client according to claim 4, wherein the processing unit (22) is adapted to determine a mapping between the data structures of the web service client (12) and the implementation of the interface (19) of a Jini service (11).

6. Web service client according to claim 5, wherein the processing unit (22) is adapted to extract a pointer to the Jini lookup service (13) from the service bindings (20) of the description file (17), the web service client (12) further comprising a Jini proxy code requesting unit (23) for requesting a Jini proxy code (15) from the Jini lookup service (13).

7. Computer network (10), comprising:
at least one web service according to claim 1, the web service being preferably a Jini service (11),
at least one web service client (12) according to claim 4,
a lookup service, in particular a Jini lookup service (13), serving as a registry for proxy codes (15), and
a web service discovery unit, in particular an Universal Description Discovery and Integration, UDDI, repository (14), for storing description files (17) of web services (11).

8. A method for generating a description file of a web service (11), in particular a Web Services Definition Language, WSDL, description file (17), the method comprising:
defining an interface (19) of the web service, and
defining a service binding (20) to the interface (19) of the web service (11),
**characterized by**
defining an implementation of the interface (19) of the web service (11) in the service binding (20).

9. Method according to claim 8, wherein the service binding (20) defines an implementation of the interface (19) of a Jini service (11), preferably containing a pointer to at least one Jini lookup service (13).

10. Computer program product comprising code for implementing the method according to claim 8.
